# EUROPEAN PATENT APPLICATION

(11) **EP 2 601 832 A1**
(43) Date of publication of application: **12.06.2013**
(21) Application number: 11192024.5
(22) Date of filing: 05.12.2011
(51) Int. Cl.: A01M 21/00, A01G 13/02

(54) **A method to seal land with an air tight covering and a machine suitable for applying the method**

(71) Applicant: Seelen, Wilhelmus Johannes Peter, 5993 NH Maasbree (NL)
(72) Inventor: Seelen, Wilhelmus Johannes Peter, 5993 NH Maasbree (NL)
(74) Representative: Janssen, Paulus J. P.

(57) **Abstract**

The present invention concerns a method to seal land with an air tight covering (31,31') comprising multiple sheets (30,30') that extend in parallel over the land, the sheets (31,31') being welded together along their lateral edges and at least at one edge being worked in the land to keep their position. The invention also pertains to an agricultural machine (1) that is suitable to perform the said method.

## Description

The present invention concerns a method to seal land with an air tight covering comprising multiple sheets that extend in parallel over the land, the sheets being welded together along their lateral edges. The invention also pertains to an agricultural machine that is suitable to perform the said method.

### Background art

In the art, sealing land with an air tight covering is used for various purposes, i.a. for weed preventing and soil resetting, the latter also known as biological soil disinfection or bio fumigation. Weed preventing by an air tight covering of the land is simply based on removing air needed for the weed to grow. Soil resetting is based on the principle of applying organic matter to the soil and allowing it to ferment. The gases produced during the anaerobic fermentation process kill many soil borne pathogens. Typical microorganisms aimed at are fungi such as *Verticillium dahliae*, *Fusarium oxysporum* and *Rhizoctonia solani*, and various nematodes such as *Pratylenchus penetrans*. Soil resetting has become more popular since many vegetable farms specialise in a limited number of crops, making crop rotation virtually impossible. As is commonly know, the resulting monocultures are very vulnerable to soil borne pathogens such as fungi, nematodes, insects etc. Solutions such as treatment with chemicals or steam sterilization are known but all have their typical disadvantages.

From JP 2004033032 (assigned to Meishin Denki KK) a method to seal land with an air tight covering is known wherein multiple sheets that extend in parallel (i.e. the sheets extend substantially in the same direction) over the land are glued together at overlapping edges. In order to secure the sheets to the land fixing tools are driven into fixing holes present in the sheets. A disadvantage of this method is that it is relatively time and labour consuming to cover a piece of land completely and also, that numerous holes are present to which air can flow through the coverage. Also, there is a considerable risk of the foil tearing due to the presence of the fixing tools. An alternative method is known wherein very heavy, more or less stiff plastic is used that does not need to be fixed at numerous sites along its edges. Such plastic however is hard to handle and expensive. Also a method is known wherein a thin plastic foil is used, like a foil as described in the above mentioned Japanese patent application, for example Hytibarrier foil (available from Hyplast, Hoogstraten, Belgium) or Orgasun and Orgafum foil (available from Plastika Kritis, Iraklion, Crete, Greece), wherein the edges of the foil are covered with soil originating from the land to be reset. This soil has the function of keeping the thin foil where it is during the time needed for weed prevention or soil resetting. An important disadvantage however is that the soil on top of the foil is not subjected to the treatment and thus, that the contamination with the soil borne pathogens remains, although to a lesser extent. A mean to prevent this is to use soil from a remote piece of land that is free from these pathogens. However, this means that soil has to be tested beforehand on the presence of pathogens and also, that clean soil has to be transported from one piece of land to another. For these reasons, a method is often used wherein heavy objects such as worn tires are used to cover the edges of the sheets at regular distances. This however also means that the method is labour intensive.

### Summary of the invention

It is an object of the present invention to overcome or at least mitigate the disadvantages of the prior art methods, to this end a method according to the preamble has been devised, wherein the method comprises placing a first sheet over the land, the first sheet extending from an upstream end of the land to a downstream end of the land, positioning a second sheet at the upstream or downstream end of the land, a first lateral edge of the second sheet overlapping the first sheet, digging a slot parallel to the first sheet, the slot being positioned adjacent the second lateral edge of the second sheet, between the said first and second lateral edge, unwinding the second sheet in essence parallel to the first sheet towards the opposite end of the land, the second lateral edge of the second sheet covering the slot, during which unwinding the first lateral edge is welded to the first sheet, pressing the second lateral edge into the slot, filling the slot with soil, and after the second sheet has been unwound along the first sheet to extend between the upstream end and downstream end of the land, positioning a next sheet at the upstream or downstream end of the land, a first lateral edge of the next sheet overlapping the second sheet, the next sheet being processed as the second sheet, and optionally repeating these steps with n following sheets, n being a natural number, until the land is covered.

In this method, one edge of each sheet is secured into a slot dug into the land. The next sheet is welded to the former sheet adjacent this slot, thereby inherently also being secured to the land. Also, by digging the sheet into the land, the soil used for filling the slot and securing the sheet will also be covered by the (next) sheet and thus, will also be covered from access by the open air. Lastly, the present method is very simple to automate since common tools can be used for securing the sheet while unwinding it from a package, namely a plough, shovel and wheel or alike. Such tools can easily be installed in line to enable a method wherein a sheet is unwound and at the same time secured to the land needing no more than the soil present.

The present invention also pertains to an agricultural machine suitable for performing a method as described here above, the machine having an operative width extending between a first and second end, the operative width corresponding to the width of a sheet, the machine comprising a carrier for carrying the sheet being present in a package, means to unwind the sheet from the package and feed the sheet to cover the land, at the first end of the machine, a plough to dig a slot in the land, and upstream of the plough an element to force a part of the sheet unwound from the package into the slot (which element may for example be a wheel, or a static U-turn profile, a static or rolling ball etc.), and upstream from this element, a shovel to shovel soil into the slot on top of the sheet, and optionally upstream of the shovel a pressing element to press the soil shovelled into the slot (which pressing element may for example be a wheel or other type of roller, a ball etc.), and at the first or second end of the machine, welding means for connecting the edge of the sheet to another sheet.

### Definitions

*A sheet*: a broad, thin, usually rectangular mass or piece of material, such as for example paper, plastic, metal, glass, plywood etc. A sheet may be comprised of multiple separate (sub-)sheets joined at a seam, for example by welding.

*A sheet in a package*: a 3D constitution of a 2D sheet that is packed, for example by wounding or folding, to become three dimensional. Typically the package is a roll, wherein the sheet is wound on a core.

*Unwinding*: to release from a package in a single layer, typically by unwinding a sheet from a roll (the sheet being wound on a core), or from a package wherein the sheet is folded or in any other way packed to become a 3D constitution.

*An air tight covering*: a covering that substantially prevents open air (wind) to pass through. Small holes may however be present due to bird bites, sharp objects being present on the land, small damages etc. Also, the gases in the air may pass through the covering at a molecular level by diffusion even if there are no small holes present at all.

*Land*: an agricultural or farming area.

*Welding*: to bring into union to arrive at a substantially air-tight connection, for example by applying heat and/or using an additional material such as a glue or adhesive tape, in each case optionally in combination with pressure.

*A plough*: an implement that can be used in breaking up land.

*A shovel*: a tool for moving material, typically a tool with a broad scoop or blade, but alternatively the shovel may comprise as an operative head for example a worm wheel, bristle, blower etc.

### Embodiments of the invention

In a first embodiment of the method according to the invention the soil is pressed into the slot after it has been shovelled into this slot. By pressing the soil into the slot an improved securing takes place since soil simply shovelled into a slot has a very open structure. By pressing the soil the sheet gets very tightly secured which is particularly advantageous when hard winds blow over the covered land. Such winds may be able to release sheet that is secured in a slot of which the soil is not actually pressed after the slot is filled with soil. Indeed, this may depend also on the depth of the slot, the nature of the soil, and various other factors.

In another embodiment adjacent sheets are unwound in opposite directions. This has the advantage that a piece of land can be covered in less time.

In another embodiment the welding takes place by applying a glue that unites the lateral edges of the sheets. The type of glue is not critical, as long as the lateral edges of the sheets can be glued together to be united to become air tight. The glue can be applied as a layer, in the form of multiple dots, as a continuous line, as a mist of droplets etc. The way of applying the glue should be adopted to the type of glue (either water based, solvent base, solvent-less, hot melt, two-component, its viscosity, its drying time etc.) It is best to follow manufacturer's instructions. Suitable glues can be obtained from Fourny, Willebroek, Belgium.

In yet another embodiment, a glue is applied to a sheet before the next adjacent sheet is unwound. In this embodiment a layer of glue is subjected to a significant period of time to pre-dry before the next sheet is brought in contact with the glue. This provides an opportunity for most solvent to leave the glue. The effect is that the contacted sheet is almost instantaneously fixated to the previous sheet and that there is less risk of glued sheets to detach.

In an embodiment, a glue is applied during unwinding the sheet to be glued. In this embodiment, right before a sheet is unwound to be glued to the previous sheet glue is applied. This glue can for example be applied to the sheet that is being unwound, to the previous sheet, or to both. The advantage of this embodiment is that dust, other particulate material (like sand, leaves), insects, water drops (when its raining etc.) can hardly impact the gluing capacity since the glue is applied and used to bind two sheet surfaces immediately afterwards. This embodiment may be combined with the embodiment wherein a glue is applied before a next adjacent sheet is unwound, in particular to make sure sufficient clean glue is present in the contact area between the sheets. Alternatively, the glue applied right after unwinding a next sheet is the only glue present to bind the two sheets together.

In an embodiment the sheet used is a plastic sheet. Plastic has the advantages of being relatively inexpensive, being easy to handle, may have a good tear resistance and resistance to UV radiation while at the same time being substantially air tight. Preferably, the sheet comprises multi layers of plastic. The presence of multi layers provides the opportunity that the required properties of the plastic sheet (tear resistant, air tight, UV resistant etc.) need not be present in one and the same plastic material. For example, in a three layer constitution, the upper layer can be composed of a material that substantially blocks UV radiation, the middle layer can be composed of an air tight plastic, and the lower layer can be composed of a material that provides excellent tear resistance. In a further embodiment, the plastic is biodegradable. This may have the advantage that the sheet material need not be removed from the land but is for example ploughed in and left to decompose.

In another embodiment the glue used is substantially free of solvent. This has the advantage that drying of the glue is no issue when gluing the sheets together. Drying times may be long when the sheet material is substantially air tight. Air tight often also means "solvent molecule" tight or at least the sheets are hard to permeate by the solvent molecules. Long drying times are in particular a problem when for example a hard wind is blowing while the land is being covered.

In a particularly preferred embodiment a machine is used that has an operative width extending between a first machine end and a second machine end, the operative width being substantially the same as the width of the sheets, which machine carries the sheets wound as a continuous lane on a core and has means to unwound the sheet from the core to cover the land, the machine at its first or second end has means for automatically welding overlapping sheets, the machine at its second end automatically performing the steps of digging the slot, pressing a lateral edge of a sheet into the slot, thereafter filling the slot with soil and optionally pressing the soil into the slot, leading to anchoring the sheet in the land. It has been proven that with such a machine, a large part of the covering labour can be automated while at the same time reaching a perfect or at least near perfect air tight covering of the land. The welding may take place by applying heat by contact heating, radiation, ultrasonic waves etc., but may also takes place by using an intermediate material such as a glue (optionally a two-component glue wherein for example each component is applied to a different sheet such that reaction only takes place upon contact of the sheets).

In a further embodiment a machine is used that at both its first and second end has means for 1) welding, 2) means for digging the slot, 3) means for pressing a lateral edge of a sheet into the slot, 4) means for filling the slot with soil and 5) optional means for pressing the soil into the slot. This machine has the advantage that at both its ends all needed process steps can be performed. This means that the machine can be used to dig in the first sheet at both sides, thereby obviating the necessity to secure the first sheet at both its lateral edges, and also that the machine can be used in both upstream and downstream directions for unwinding sheets and covering the land with this sheets at the same time.

The machine according to the invention in an embodiment has a restraining element adjacent the shovel to enable minimizing the amount of soil being thrown on top of the sheet when shovelling soil into the slot. This provides the advantage that the area which is meant for welding the sheets together is not or hardly fouled with soil which would otherwise negatively impact the welding performance.

In an embodiment the machine has at both its ends a plough to dig a slot in the land, and upstream of the plough an element to force a part of the sheet unwound from the package into the slot, and upstream from this element, a shovel to shovel soil into the slot on top of the sheet, and upstream of the shovel an optional pressing element to press the soil shovelled into the slot, and welding means for connecting the edge of the sheet to another sheet. This machine has the advantage that at both its ends all needed process steps can be performed. This means that the machine can be used to dig in the first sheet at both sides, thereby obviating the necessity to secure the first sheet at both its lateral edges, and also that the machine can be used in both upstream and downstream directions for unwinding sheets and covering the land with this sheet at the same time.

In an embodiment the welding means comprises means to apply glue to a lateral edge of a sheet (for example a glue gun, a spray head, a simply nozzle, a bristle etc). In a further embodiment the machine has means for applying glue to both a sheet already covering the land and a sheet after it is unwound from the package but before it covers the land. A machine according to this embodiment is very flexible towards the type of glue being used. For a solvent rich glue it might be advantageous to apply a layer of glue to a sheet that is unwound such that the solvent has time to evaporate. For a solvent less or solvent free glue it might be advantageous to apply the glue to the previous sheet just before the sheet to be glued (the next sheet) is unwound, or alternatively, apply the glue right after the sheet to be unwound is actually unwound and applied to the land, partly overlapping the previous sheet.

**In** yet another embodiment the package is located at an upstream end of the machine, at a height corresponding to an average adult human pelvic level, the machine comprising rollers to guide a sheet unwound from the package to a position adjacent the land. This embodiment has the advantage that a new package can be relatively easy be positioned in an operative position in the machine. A new package could be lifted for example by two operators which place the package at their pelvic level in the machine. Preferably, the new package is already present in the machine, for example lying somewhat upstream of the ultimate operative position of the package (i.e. the position of the package when being actually used to unwind a sheet therefrom to cover the land).

### Brief description of the drawings

Figure 1 schematically shows a side view of an agricultural machine for performing the invention.
Figure 2 schematically shows a rear view of the agricultural machine of figure 1.
Figure 3 schematically shows the result of a sheet being processed according to the present invention.

### Figure 1

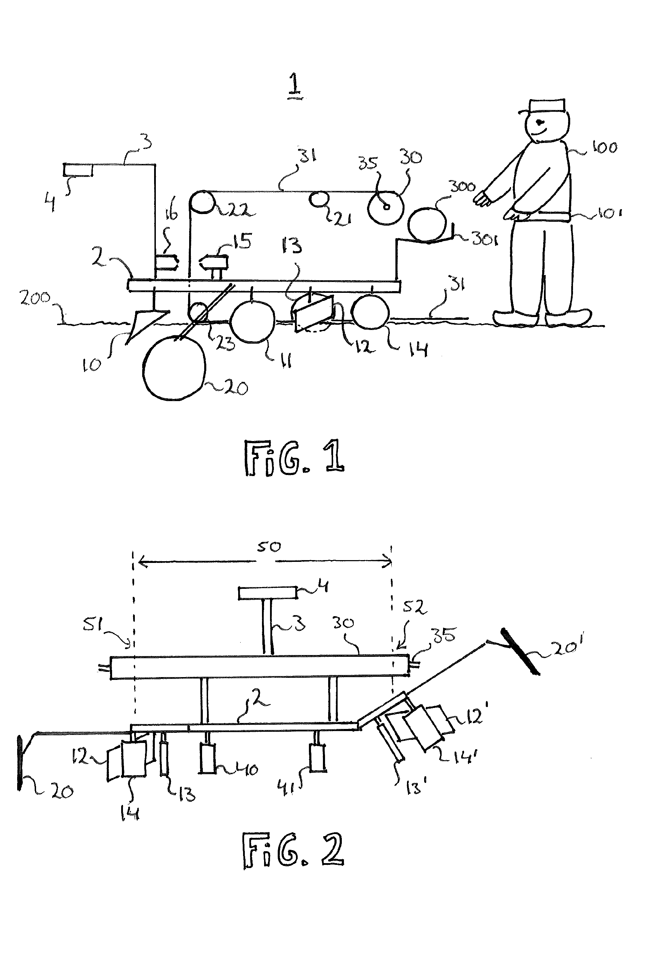

Figure 1 schematically shows a side view of an agricultural machine 1 for performing the invention. The machine comprises a frame 2 to which various means for performing the method according to the invention are operatively connected. The machine 1 is provided with connecting rod 3, extending to connecting means 4 for connecting the machine to a standard agricultural tractor (not shown), such as a Massey Ferguson 7600 series. To the frame is connected at the most downstream position a plough 10, meant to dig a slot in the land. In the working space of the plough 10, this plough is followed by a wheel 11, which wheel is positioned such that it will "walk" through the slot dug in the land (meant for pressing a sheet into the slot). Wheel 11 on its turn is followed by a shovel 12 which will shovel soil that is thrown on the land by plough 10, into the slot. In order to make sure that as much soil as possible is actually shovelled on top of the slot, a restraining member 13 (in this case a simple flat wheel) is placed adjacent the opposing side of the (virtual) slot to run in conjunction with the shovel 12. Lastly, in this embodiment shovel 12 is followed by a wheel 14 that pressed soil shovelled on top of the slot actually into the slot in order to prevent substantial dykes to be formed in the land and to improve the securing of the sheet into the slot.

The machine is provided with to glue guns 15 and 16, which can spray a layer of glue on the respective sides of a sheet 31 which is unwound from roll 30, which rolled is in hanging engagement with carrier bar 35, and guided over rollers 21, 22 and 23 to be covered over the land 200. The machine has a spare roll 300, which roll has the same type of sheet wound on a core (not shown), and is place in a spare roll holder 301. This roll 301, as well as roll 30, is substantially positioned at the normal pelvic height 101 of a normal adult 100 in order to facilitate the manual change of the rolls during operation of the machine 1. Immediately after roll 30 is empty, *viz*. all sheet material has been unwound from the roll, the remaining core is removed from the machine and roll 300 is placed at the position where roll 30 was before. The downstream end of the sheet wound on roll 300 is released from the roll and connected to the upstream end of the sheet that was originally wound on roll 30. Typically this connection takes place by gluing the two sheet ends together. After the connection is confirmed to be suitable for operation of the machine, roll 300 can be used to unwind sheet material therefrom to cover the land.

### Figure 2

Figure 2 schematically shows a rear view of the agricultural machine of figure 1 (not all features are present in this schematic rear view). The machine has an operating with 50, which extends between a first end 51 of the machine and a second end 52. In this view it can seen that wheel 20 extends from a first lateral end of machine 1. This wheel may serve as a beacon for the driver of the tractor (not shown) to make sure he keeps a proper distance from a previous sheet. It can be seen in this view that at both lateral ends of the operating width of the machine, the means are present for ploughing a slot, pressing a sheet into the slot, shovelling soil into the slot (12, 12', 13, 13'), and pressing the soil into the slot with a wheel (14, 14'). Also, the machine is provided with centre wheels 40 and 41 to keep the machine in a stable position when one of the ends of the machine is folded away from the land, as depicted in figure 2 with the means indicated with an apostrophe (12', 13', 14' and 20'). In this configuration, only at one end a sheet is actually ploughed into the land, which is the normal way of operation for any sheet being unwound next to a sheet already covering the land.

In another embodiment (not shown), the working means on either side can be tilted away with the pressing wheel 14 (14') remaining in contact with the ground surface. This way, the pressing wheel can be used to roll over the glued area in order to establish an even more firm contact between the sheets.

### Figure 3

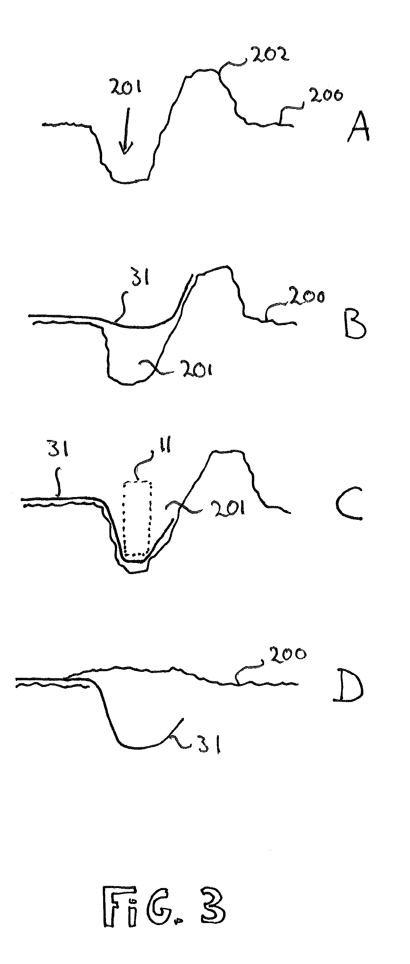

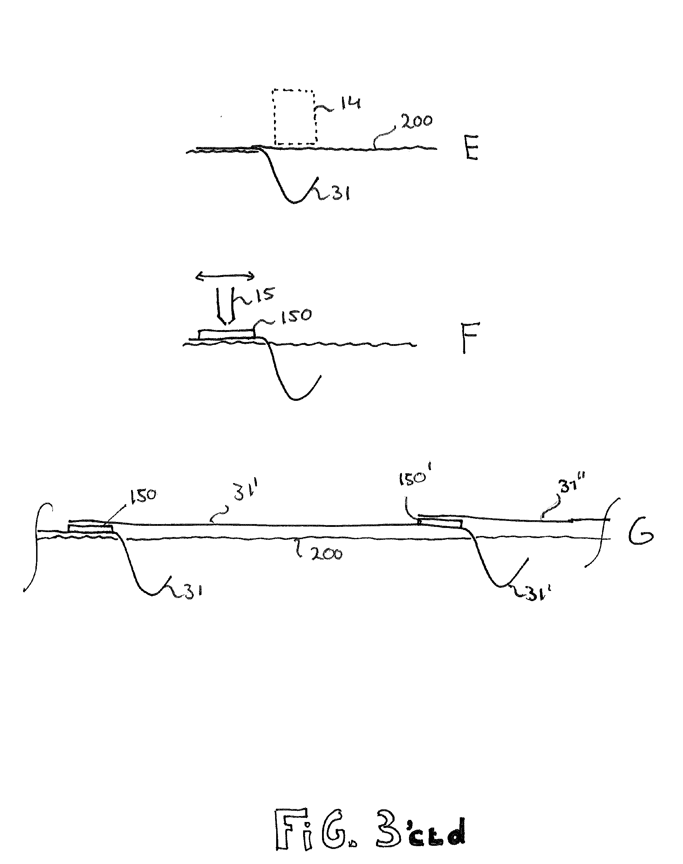

Figure 3 schematically shows the result of a sheet being processed according to the present invention. In figure 3A, the result of the plough (not shown) digging a slot 201 into the land is depicted. On top of surface 200, a heap of soil 202 is created. In figure 3B, it is shown that a sheet 31 is unwound to cover the land (surface 200), including slot 201. Figure 3C shows that a wheel 11 (which is shown in dotted lines) which runs through the slot pressed the sheet 31 into the slot. In a next step, the heap of soil 202 is shovelled into the slot 201 which results in a situation as depicted in figure 3D. The sheet 31 is now buried in the slot 201 and thus secured into the land. Thereafter, the loose soil lying on top of the buried sheet is pressed with a wheel 14, as shown in dotted lines in figure 3E, to flatten surface 200 and to even more firmly secure the sheet 31 in the land. At the same time, a layer of glue 150 (Vitagra glue, available from Fourny,

Wllebroek, Belgium) is applied to the sheet adjacent the position where the sheet is dug in, with gluing gun 15 which oscillates as indicated in figure 3F. Then, a next sheet 31' is connected to sheet 31 by overlapping the next sheet at least to an area where sheet 31 is provided with the layer of glue 150. At the opposite side, the next sheet 31' is processed according to the steps indicated in figures 3A to 3F. Then, yet another sheet 31"' is connected to sheet 31' in a corresponding way, as indicated in figure 3G. This way, a piece of land can be completely covered with the sheets to obtain a covering which is firmly secured to the land and is substantially air tight. Using the present method and machine, 2½ acres of land (about 10.000 square meters) can be covered in about 2 hours, needing one man to drive the tractor, and 1 one optional man to oversee the machine and help with loading a new roll of sheet material.

## Claims

1. A method to seal land with an air tight covering comprising multiple sheets that extend in parallel over the land, the sheets being welded together along their lateral edges, the method **characterised in that** it comprises:
- placing a first sheet over the land, the first sheet extending from an upstream end of the land to a downstream end of the land,
- positioning a second sheet at the upstream or downstream end of the land, a first lateral edge of the second sheet overlapping the first sheet,
- digging a slot parallel to the first sheet, the slot being positioned adjacent the second lateral edge of the second sheet, between the said first and second lateral edge,
- unwinding the second sheet in essence parallel to the first sheet towards the opposite end of the land, the second lateral edge of the second sheet covering the slot, during which unwinding the first lateral edge is welded to the first sheet,
- pressing the second lateral edge into the slot,
- filling the slot with soil,
- and after the second sheet has been unwound along the first sheet to extend between the upstream end and downstream end of the land, positioning a next sheet at the upstream or downstream end of the land, a first lateral edge of the next sheet overlapping the second sheet, the next sheet being processed as the second sheet, and
- optionally repeating these steps with n following sheets, n being a natural number, until the land is covered.

2. A method according to claim 1, **characterised in that** after a slot is filled with soil, the soil is pressed into the slot.

3. A method according to claim 1 or 2, **characterised in that** adjacent sheets are unwound in opposite directions.

4. A method according to any of the preceding claims, **characterised in that** the welding takes place by applying a glue that unites the lateral edges of the sheets.

5. A method according to claim 4, **characterised in that** a glue is applied to a sheet before the next adjacent sheet is unwound.

6. A method according to claim 4 or 5, **characterised in that** a glue is applied during unwinding the sheet to be glued.

7. A method according to any of the preceding claims, **characterised in that** the sheet used is a plastic sheet.

8. A method according to claim 7, **characterised in that** the sheet comprises multi layers of plastic.

9. A method according to claim 7 or 8, **characterised in that** the plastic is biodegradable.

10. A method according to any of the claims 4 to 9, **characterised in that** the glue used is substantially free of solvent.

11. A method according to any of the preceding claims, **characterised in that** a machine is used that has an operative width extending between a first machine end and a second machine end, the operative width being substantially the same as the width of the sheets, which machine carries the sheets wound as a continuous lane on a core and has means to unwound the sheet from the core to cover the land, the machine at its first or second end has means for automatically welding overlapping sheets, the machine at its second end automatically performing the steps of digging the slot, pressing a lateral edge of a sheet into the slot, thereafter filling the slot with soil and optionally pressing the soil into the slot.

12. A method according to claim 11, **characterised in that** a machine is used that at both its first and second end has means for 1) welding, 2) means for digging the slot, 3) means for pressing a lateral edge of a sheet into the slot, 4) means for filling the slot with soil and 5) optional means for pressing the soil into the slot.

13. An agricultural machine suitable for performing a method according to any of the claims 1 to 12, the machine having an operative width extending between a first and second end, the operative width corresponding to the width of a sheet, the machine comprising:
- a carrier for carrying the sheet being present in a package,
- means to unwind the sheet from the package and feed the sheet to cover the land,
- at the first end of the machine, a plough to dig a slot in the land, and upstream of the plough an element to force a part of the sheet unwound from the package into the slot, and upstream from this element, a shovel to shovel soil into the slot on top of the sheet, and optionally upstream of the shovel a pressing element to press the soil shovelled into the slot, and
- at the first or second end of the machine, welding means for connecting the edge of the sheet to another sheet.

14. A machine according to claim 13, **characterised in that** the machine has a restraining element adjacent the shovel to enable minimizing the amount of soil being thrown on top of the sheet when shovelling soil into the slot.

15. A machine according to any of the claims 13 and 14, **characterised in that** the machine has at both its ends a plough to dig a slot in the land, and upstream of the plough an element to force a part of the sheet unwound from the package into the slot, and upstream from this element, a shovel to shovel soil into the slot on top of the sheet, and upstream of the shovel an optional pressing element to press the soil shovelled into the slot, and welding means for connecting the edge of the sheet to another sheet.

16. A machine according to any of the claims 13 to 15, **characterised in that** the welding means comprises means to apply glue to a lateral edge of a sheet.

17. A machine according to claim 16, **characterised in that** the machine has means for applying glue to both a sheet already covering the land and a sheet after it is unwound from the package but before it covers the land.

18. A machine according to any of the claims 13 to 17, **characterised in that** the package is located at an upstream end of the machine, at a height corresponding to an average adult human pelvic level, the machine comprising rollers to guide a sheet unwound from the package to a position adjacent the land.
